# EUROPÄISCHE PATENTSCHRIFT

(11) **EP 2 663 963 B1**
(45) Veröffentlichungstag und Bekanntmachung des Hinweises auf die Patenterteilung: **15.10.2014**
(21) Anmeldenummer: 11784460.5
(22) Anmeldetag: 10.11.2011
(51) Int. Cl.: G06T 7/00

(54) **VORRICHTUNG UND VERFAHREN ZUM ERFASSEN DER LAGE EINES OBJEKTS IN EINER WERKZEUGMASCHINE**
DEVICE AND METHOD FOR ESTIMATING THE POSE OF AN OBJECT INSIDE A TOOL MACHINE
DISPOSITIF ET PROCÉDÉ POUR ESTIMER LA POSE D'UN OBJET DANS UNE MACHINE-OUTIL

(30) Priorität: 13.01.2011 DE 102011002625
(43) Veröffentlichungstag der Anmeldung: 20.11.2013
(73) Patentinhaber: Dr. Johannes Heidenhain GmbH, 83301 Traunreut (DE)
(72) Erfinder: KRANITZKY, Walter, 83278 Traunstein (DE); SCHILCHER, Martin, 83374 Traunwalchen (DE); MÜHLBAUER, Gerhard, 83395 Freilassing (DE)
(74) Vertreter: Pleyer, Hans Anno
(86) Internationale Anmeldenummer: PCT/EP2011/069839
(87) Internationale Veröffentlichungsnummer: WO 2012/095199

(56) Entgegenhaltungen:
- VINCENZO LIPPIELLO ET AL: "Position-Based Visual Servoing in Industrial Multirobot Cells Using a Hybrid Camera Configuration", IEEE TRANSACTIONS ON ROBOTICS, IEEE SERVICE CENTER, PISCATAWAY, NJ, US, Bd. 23, Nr. 1, 1. Februar 2007 (2007-02-01), Seiten 73-86, XP011163518, ISSN: 1552-3098
- JIN T S ET AL: "Pose determination of a mobile-task robot using an active calibration scheme", INDUSTRIAL ELECTRONICS, 2002. ISIE 2002. PROCEEDINGS OF THE 2002 IEEE INTERNATIONAL SYMPOSIUM ON JULY 8-11, 2002, PISCATAWAY, NJ, USA,IEEE, Bd. 2, 8. Juli 2002 (2002-07-08), Seiten 447-452, XP010598428, ISBN: 978-0-7803-7369-3
- GONZALEZ-GALVAN E J ET AL: "An efficient multi-camera, multi-target scheme for the three-dimensional control of robots using uncalibrated vision", ROBOTICS AND COMPUTER INTEGRATED MANUFACTURING, ELSEVIER SCIENCE PUBLISHERS BV., BARKING, GB, Bd. 19, Nr. 5, 1. Oktober 2003 (2003-10-01), Seiten 387-400, XP004453593, ISSN: 0736-5845, DOI: 10.1016/S0736-5845(03)00048-6

## Beschreibung

Die Erfindung betrifft eine Vorrichtung und ein Verfahren zum Erfassen der Lage eines Objekts in einer Werkzeugmaschine. Solche Verfahren sind z.B. notwendig, um nach dem Aufspannen eines Werkstücks die genaue Lage des Werkstücks innerhalb der Werkzeugmaschine zu ermitteln. Die Kenntnis dieser Lage ist entscheidend für eine exakte Bearbeitung des Werkstücks, aber auch z.B. für eine Kollisionsüberwachung. Hierzu muss nicht nur die Lage des Werkstücks, sondern auch die Lage der Spannmittel ermittelt werden, die zum Festlegen des Werkstücks verwendet werden.

Da das Aufspannen und Einrichten eines Werkstücks in einer Werkzeugmaschine oft einen erheblichen Teil der Bearbeitungszeit ausmacht, ist es von Vorteil, wenn das Erfassen der genauen Lage vom Werkstück und seinen Spannmitteln möglichst schnell gelingt. Hierzu wurden bereits verschiedene Vorrichtungen oder Verfahren bekannt, die auf der Erfassung der Aufspannsituation mit der Hilfe von Kameras beruhen.

So ist in der DE 11 2007 001 977 T5 ein Verfahren beschrieben, bei dem aus dem Kamerabild eines Werkstücks ein Modell des Werkstücks extrahiert wird. Die hierzu verwendeten Verfahren wie beispielsweise das Auffinden von Kanten werden ausführlich dargestellt. Das Modell wird anschließend mit bekannten Objekten verglichen, um das jeweils vorliegende Objekt zu identifizieren. Aus dem Kamerabild werden später Position und Lage des Objekts ermittelt und beispielsweise für eine Kollisionsüberwachung herangezogen.

Auch aus der DE 10 2005 022 344 A1 ist es bekannt, die Lage eines Werkstücks zumindest grob anhand von aus einem Kamerabild gewonnenen geometrischen Parametern zu bestimmen, die mit einem Modell des Werkstücks abgeglichen werden. Die so gewonnene Information wird entweder als Ausgangspunkt für ein noch genaueres Einmessen mittels eines Tasters verwendet, oder auch unmittelbar, um eine Matrix zu bestimmen, die die Verschiebung und/oder Verdrehung des Werkstücks gegenüber einem Bezugspunkt der Werkzeugmaschine beschreibt. Somit wird eine genaue Bearbeitung des Werkstücks ermöglicht, auch wenn die tatsächliche Aufspannsituation nicht exakt der vom NC-Programm erwarteten Aufspannsituation entspricht.

Im Aufsatz "Position-Based Visual Servoing in Industrial Multirobot Cells Using a Hybrid Camera Configuration" (Vincenzo Lippiello et al, IEEE TRANSACTIONS ON ROBOTICS, 20070201 IEEE SERVICE CENTER, PISCATAWAY, NJ, US - ISSN 1552-3098, Vol:23, Nr:1, Page(s):73 - 86) wird die Ermittlung der Lage eines Werkstücks anhand von Merkmalen beschrieben, die aus einem Kamerabild extrahiert werden.

Nachteilig an den hier geschilderten Verfahren ist, dass neben einer intrinsischen Kalibrierung der Kamera, bei der die optischen Parameter der Kamera zur späteren Berücksichtigung ermittelt werden, auch eine extrinsische Kalibrierung notwendig ist, bei der Lage und Ausrichtung der Kamera ermittelt werden. Diese extrinsische Kalibrierung muss dabei im Gegensatz zur intrinsischen Kalibrierung oft und ggf. vor jeder Messung wiederholt werden, wenn die Kamera nicht völlig starr relativ zum Koordinatensystem der Werkzeugmaschine befestigt ist. Dies bedeutet einen sehr hohen Aufwand entweder bei der Montage der Kamera, oder für die regelmäßige externe Kalibrierung der Kamera.

Aufgabe der Erfindung ist es, eine Vorrichtung und ein Verfahren zu schaffen, die eine vereinfachte Lokalisierung eines Objektes in einer Werkzeugmaschine mittels einer Kamera ermöglichen, wobei der Aufwand für die Montage und Kalibrierung der Kamera reduziert ist.

Dies wird erreicht durch eine Vorrichtung nach Anspruch 1 bzw. durch ein Verfahren gemäß dem unabhängigen Verfahrensanspruch.

Vorteilhafte Details ergeben sich aus den jeweils abhängigen Ansprüchen.

Es wird eine Vorrichtung bzw. ein Verfahren zum Erfassen der Lage eines Objekts in einer Werkzeugmaschine beschrieben. Dabei kommt eine Kamera zum Einsatz, die ein Bild des Objekts und eines Objektträgers liefert, mit dem das Objekt verbunden ist und dessen Lage innerhalb der Werkzeugmaschine bekannt ist. Ein erstes Verarbeitungsmittel ermöglicht das Erkennen der Lage des Objekts relativ zur Kamera anhand von aus dem Bild gewonnenen geometrischen Merkmalen des Objekts. Ein zweites Verarbeitungsmittel dient dem Erkennen der Lage des Objektträgers relativ zur Kamera anhand von aus dem Bild gewonnenen geometrischen Merkmalen des Objektträgers. Ein drittes Verarbeitungsmittel dient schließlich dem Bestimmen der Relativlage zwischen Objektträger und Objekt aus den Relativlagen zwischen Kamera und Objekt bzw. Kamera und Objektträger.

Eine extrinsische Kalibrierung der Kamera ist somit überflüssig, denn Position und Ausrichtung der Kamera werden durch eine Verrechnung der Relativlagen unwichtig. Auf dem Kamerabild muss nur jeweils ein ausreichend großer Ausschnitt des Objekts und des Objektträgers zu erkennen sein, der eine automatisierte Erkennung ermöglicht. Selbst wenn also die Kamera an einem Ort montiert ist, an dem sie durch mechanische oder thermische Einflüsse bewegt wird, ändert sich die jeweils bestimmte Relativlage zwischen Objekt und Objektträger nicht. So kann etwa eine Begrenzungswand des Innenraumes der Werkzeugmaschine als Montageort der Kamera dienen, auch wenn es sich hier um eine einfache Verkleidung aus Blech handelt, die sich relativ leicht verbiegen und dabei vor allem die Ausrichtung der Kamera deutlich verändern kann.

Beim Objektträger kann es sich um den Werkstücktisch handeln, auf dem das Objekt, also z.B. ein Werkstück oder ein Spannmittel, unmittelbar angeordnet ist. Solche Werkstücktische weisen oft sehr prägnante und definierte Strukturen aus T-Nuten oder Bohrlöchern auf, deren Kanten auf dem Bild der Kamera gut zu erkennen sind, und die sich daher gut zur automatisierten Bildverarbeitung eigenen.

Als Objektträger im Sinne der Erfindung kann aber auch ein anderer Bestandteil der Werkzeugmaschine dienen, dessen Lage innerhalb der Werkzeugmaschine bekannt ist, und der in definierter Weise mit dem Werkstücktisch verbunden ist, auf dem das Werkstück unmittelbar angeordnet ist. So könnte beispielsweise eine den Werkstücktisch tragende Brücke als Objektträger im Sinne der Erfindung verwendet werden, oder jede andere markante Struktur der Werkzeugmaschine, wenn deren Lage bekannt ist, und von der aus eine definierte Verbindung zum Werkstücktisch besteht.

Beim Objekt kann es sich um ein Werkstück handeln, das mit einem Werkzeug der Werkzeugmaschine bearbeitet werden soll. Das Werkzeug wird dabei auf vorher in einem NC-Programm festgelegten Bahnen relativ zum Werkstück bewegt, und trägt dabei Material vom Werkstück ab. Beim Objekt kann es sich aber auch um ein Spannmittel halten, mit dem das Werkstück gehalten wird, also beispielsweise um einen Schraubstock.

Vom Bearbeitungspunkt des Werkzeugs (dem Tool Center Point oder TCP) aus ist die Lage zwischen Werkzeug und Werkstück oft durch die sogenannte Kinematische Kette definiert. Dabei wird die Geometrie der Werkzeugmaschine ebenso berücksichtigt wie die Stellung jeder Achse der Werkzeugmaschine. So ist in einer 5-Achs-Fräsmaschine die Stellung des Werkzeugs nach Lage und Ausrichtung relativ zum Werkstücktisch jederzeit durch die Kinematische Kette festgelegt. Das Einmessen eines neu aufgespannten Werkstücks dient letztlich dazu, auch dieses Werkstück in die Kinematische Kette zu integrieren, damit das Werkzeug in der im NC-Programm festgelegten Weise zum Werkstück positioniert und geführt werden kann. Hierzu genügt es, Lage und Ausrichtung des Werkstücks relativ zu irgendeinem Punkt der bereits bekannten Kinematischen Kette zu ermitteln, denn dieser Punkt ist ja in einer definierten Weise mit der Oberfläche des Werkstücktisches verknüpft. Im Sinne der Erfindung ist der Begriff Objektträger daher zu verstehen als der Bereich der Werkzeugmaschine, dessen Lage und Ausrichtung relativ zum Werkzeug bereits bekannt ist, wie beispielsweise alle Bestandteile der Kinematischen Kette der Werkzeugmaschine.

Da zum Befestigen eines Werkstücks am Werkstücktisch Spannmittel nötig sind, die zwar nicht bearbeitet, aber z.B. für eine Kollisionsüberwachung berücksichtigt werden müssen, sind auch diese Spannmittel als Objekt zu betrachten, deren Lage und Orientierung in der Kinematischen Kette der Werkzeugmaschine ermittelt werden muss. Daher sind Spannmittel und Werkstücke Objekte im Sinne der Erfindung.

Sowohl das Objekt als auch der Objektträger müssen bezüglich Form und Größe bekannt sein, um aus dem Kamerabild auf die jeweilige Relativlage schließen zu können. Daher haben die Verarbeitungsmittel Zugriff auf Speicherbereiche, in denen diese geometrischen Informationen des jeweiligen Objekts und des Objektträgers abgelegt sind.

Weitere Vorteile sowie Einzelheiten der vorliegenden Erfindung ergeben sich aus der nachfolgenden Beschreibung einer bevorzugten Ausführungsform anhand der Figuren. Dabei zeigt
- Figur 1: einen Ausschnitt einer Werkzeugmaschine, bei dem die Relativlage zwischen Kamera und Werkstück bzw. Kamera und Werkstücktisch eingezeichnet ist,
- Figur 2: einen Ausschnitt einer Werkzeugmaschine, bei dem die Relativlage zwischen Werkstück Werkstücktisch eingezeichnet ist.

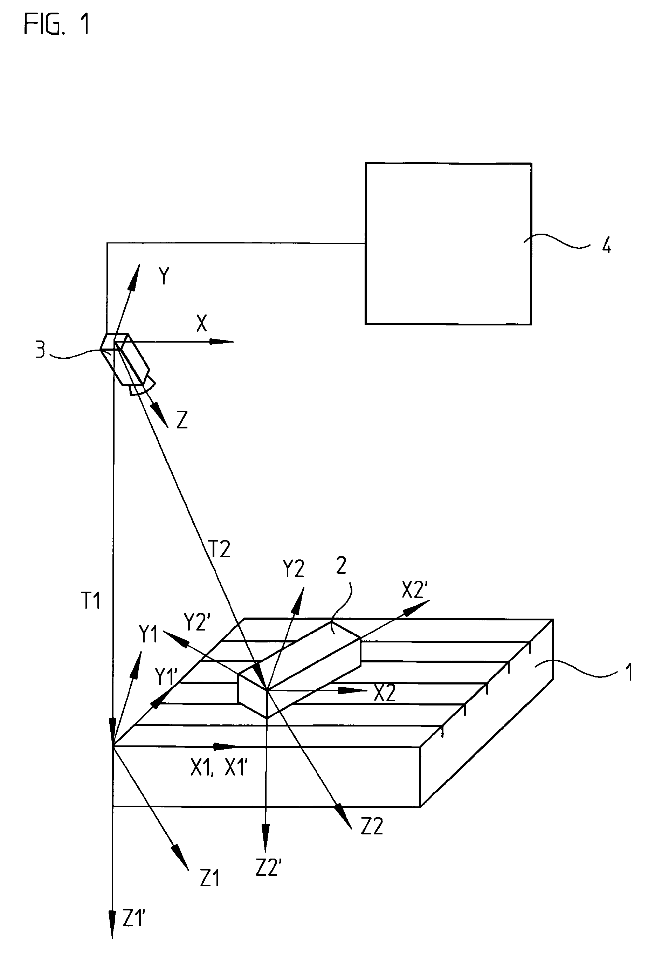

In der Figur 1 ist ein Ausschnitt einer Werkzeugmaschine dargestellt. Es ist ein Objektträger in Form eines Werkstücktisches 1 gezeigt, auf dem ein Objekt in Form eines Werkstücks 2 angeordnet ist.

Eine beispielsweise am Gehäuse der Werkzeugmaschine befestigte Kamera 3 liefert ein Bild, das sowohl den Werkstücktisch 1 als auch das Werkstück 2 zeigt, oder zumindest jeweils einen Ausschnitt davon, der groß genug ist, um daraus Lage und Orientierung von Werkstücktisch 1 und Werkstück 2 automatisiert zu ermitteln.

Dieses Bild wird an eine Steuerung 4 übermittelt, die zumindest den Ablauf des erfindungsgemäßen Verfahrens bewerkstelligt. Vorzugsweise handelt es sich dabei um eine Numerische Steuerung, die auch alle anderen Steuerungsvorgänge wie das Abarbeiten eines NC-Programms an der Werkzeugmaschine übernimmt.

Die Kamera 3 habe eine Lage, die durch den Ursprung des Koordinatensystems X-Y-Z, und eine Ausrichtung, die durch die Koordinatenachsen X, Y und Z festgelegt sind. So definiert beispielsweise die Blickrichtung der Kamera 3 ohne Beschränkung der Allgemeinheit die Z-Achse des Koordinatensystems der Kamera 3.

Der Werkstücktisch 1 habe eine Lage, die durch den Ursprung des Koordinatensystems X1'-Y1'-Z1', und eine Ausrichtung, die durch die Koordinatenachsen X1 Y1', Z1' festgelegt sind. So definiert beispielsweise ein auf den Tisch 1 gefälltes Lot ohne Beschränkung der Allgemeinheit die Z1'-Achse des Koordinatensystems der Tisches 1. Die Tischkanten bestimmen die weiteren Koordinatenachsen X1' und Y1', der Ursprung liegt in einer Ecke des Tisches 1.

Das Werkstück 2 habe eine Lage, die durch den Ursprung des Koordinatensystems X2'-Y2'-Z2', und eine Ausrichtung, die durch die Koordinatenachsen X2', Y2', Z2' festgelegt sind. So definieren die Kanten des quaderförmigen Werkstücks 2 ohne Beschränkung der Allgemeinheit die Richtungen der Koordinatenachsen X2', Y2', Z2' des Werkstücks 2.

Die Wahl der Koordinatensysteme von Werkstücktisch 1, Werkstück 2 und Kamera 3 in der Figur 1 kann auch völlig anders und allein aus praktischen Gesichtspunkten erfolgen. Für anders geformte Tische 1 und Werkstücke 2 mögen andere Koordinatensysteme im Sinne einer einfacheren Darstellung von Lage und Orientierung geeigneter sein.

Durch Methoden der Bildauswertung, wie sie unter anderem im zitierten Stand der Technik beschrieben sind, ermittelt in einem ersten Schritt ein erstes Verarbeitungsmittel in der Steuerung 4 die Lage des Werkstücks 2 relativ zur Kamera 3. Dies ist in der Figur 1 angedeutet durch eine Translationsvektor T2 vom Ursprung der Kamera 3 zum Ursprung des Werkstücks 2, sowie durch die Koordinatenachsen X2, Y2, Z2, die parallel zu den Koordinatenachsen X, Y, Z der Kamera 3 liegen. Durch den Translationsvektor T2 und eine Drehmatrix D2, die das Koordinatensystem X2'-Y2'-Z2' in das Koordinatensystem X2-Y2-Z2 überführt, sind die Verschiebung und die Verdrehung des Werkstücks 2 relativ zur Kamera 3 festgestellt. T2 und D2 lassen sich auch zu einer homogenen Transformation H2 = [D2 | T2] zusammenfassen, indem die Drehmatrix D2 um eine zusätzliche Spalte erweitert wird, die die Komponenten des Translationsvektors T2 aufnimmt. Diese homogene Transformation H2 enthält die vollständige Information über die Verschiebung und Verdrehung zwischen der Kamera 3 und dem Werkstück 2.

Das erste Verarbeitungsmittel, das vorzugsweise als Softwarealgorithmus in der Steuerung 4 ausgebildet ist, greift hierzu auf einen Speicherbereich zu, in dem geometrische Informationen wie Form und Größe möglicher Objekte, also möglicher Werkstücke 2 oder auch Spannmittel hinterlegt sind. Durch einen Abgleich der gespeicherten Informationen mit den aus dem Kamerabild gewonnenen Informationen lässt sich in Verbindung mit der intrinsischen Kalibrierung der Kamera 3 auf das jeweilige Objekte und dessen Relativlage zur Kamera 3 schließen.

Dann ermittelt in einem zweiten Schritt ein zweites Verarbeitungsmittel in der Steuerung 4 die Lage des Tisches 1 relativ zur Kamera 3. Dies ist in der Figur 1 angedeutet durch eine Translationsvektor T1 vom Ursprung der Kamera 3 zum Ursprung des Tisches 1, sowie durch die Koordinatenachsen X1, Y1, Z1, die parallel zu den Koordinatenachsen X, Y, Z der Kamera liegen. Durch den Translationsvektor T1 und eine Drehmatrix D1, die das Koordinatensystem X1'-Y1'-Z1' in das Koordinatensystem X1-Y1-Z1 überführt, sind die Verschiebung und die Verdrehung des Tisches 1 relativ zur Kamera 3 festgestellt. T1 und D1 lassen sich auch zu einer homogenen Transformation H1 = [D1 | T1] zusammenfassen, indem die Drehmatrix D1 um eine zusätzliche Spalte erweitert wird, die die Komponenten des Translationsvektors T1 aufnimmt. Diese homogene Transformation H1 enthält die vollständige Information über die Verschiebung und Verdrehung zwischen der Kamera 3 und dem Werkstücktisch 1.

Das zweite Verarbeitungsmittel, das vorzugsweise ebenfalls als Softwarealgorithmus in der Steuerung 4 ausgebildet ist, greift hierzu auf einen Speicherbereich zu, in dem geometrische Informationen des Tisches 1 hinterlegt sind. Durch einen Abgleich der gespeicherten Informationen mit den aus dem Kamerabild gewonnenen Informationen lässt sich in Verbindung mit der intrinsischen Kalibrierung der Kamera 3 auf die Relativlage des Tisches 1 zur Kamera 3 schließen.

Die Reihenfolge von erstem und zweitem Schritt kann natürlich vertauscht werden, ebenso können erster Schritt und zweiter Schritt gleichzeitig ausgeführt werden, wenn dies etwa durch parallel laufende Algorithmen zur Bildauswertung in der Steuerung 4 möglich ist.

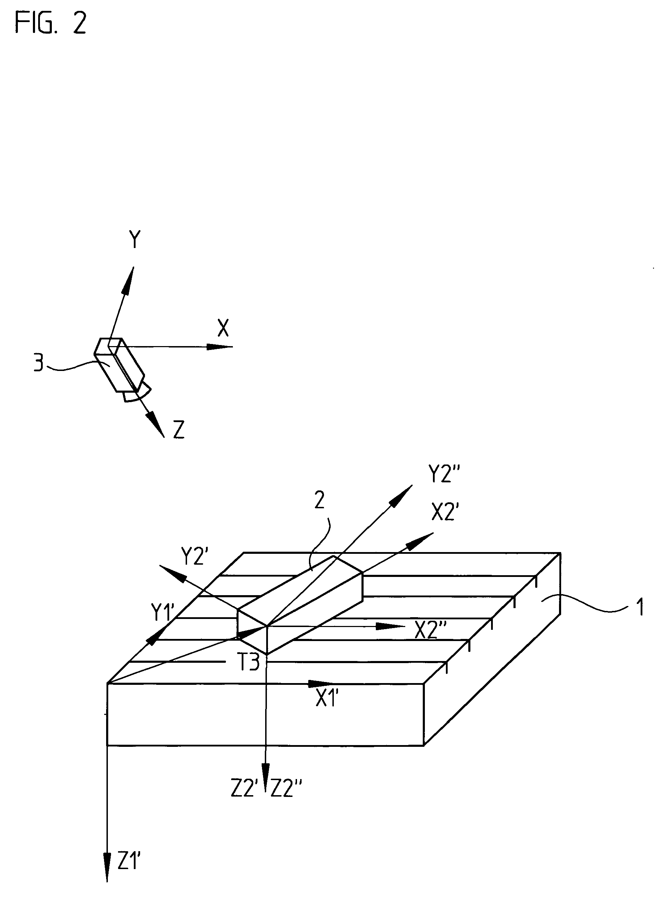

In einem dritten Schritt wird nun durch eine Verrechnung der Relativlagen zwischen Kamera 3 und Werkstück 2 bzw. Kamera 3 und Werkstücktisch 1 die Relativlage zwischen Werkstück 2 und Werkstücktisch 1 ermittelt. Durch Subtraktion des zuvor bestimmten Translationsvektors T1 vom ebenfalls zuvor bestimmten Translationsvektor T2 erhält man den in der Figur 2 gezeigten Translationsvektor T3, der nach Betrag und Richtung den Versatz zwischen dem Ursprung des Tisches 1 und dem Ursprung des Werkstücks 2 zeigt. Lage und Ausrichtung der Kamera 3 spielen für das Ergebnis keine Rolle.

Ebenso wird aus der durch die Drehmatrix D1 beschriebenen Verdrehung zwischen der Kamera 3 und dem Tisch 1 und der durch die Drehmatrix D2 beschriebenen Verdrehung zwischen der Kamera 3 und dem Werkstück 2 auf die Verdrehung zwischen dem Tisch 1 und dem Werkstück 2 geschlossen. Anders ausgedrückt wird eine Drehmatrix D3 ermittelt, die das Koordinatensystem X2'-Y2'-Z2' des Werkstücks 2 in das Koordinatensystem X2"-Y2"-Z2"überführt und damit parallel zum Koordinatensystem X1'-Y1'-Z1' des Tisches 1 ausrichtet. Hierzu muss die inverse Drehmatrix D1⁻¹ mit der Drehmatrix D2 multipliziert werden, also D3 = D1⁻¹ * D2. Diese Drehmatrix D3 und der Translationsvektor T3, die zusammen das Koordinatensystem X1'-Y1'-Y2' in das Koordinatensystem X2'-Y2'-Z2' überführen, enthalten die gesuchte Information über die Lage und Ausrichtung des Werkstücks 2 relativ zum Werkstücktisch 1. Alternativ kann auch eine homogene Transformation H3 = H1⁻¹ * H2 berechnet werden, die die Verschiebung und Verdrehung zwischen Werkstücktisch 1 und Werkstück 2 in einer Matrix beschreibt. Wichtig ist, dass T3 und D3 bzw. H3 unabhängig sind von der Ausrichtung der Kamera 3 und somit eine extrinsische Kalibrierung der Kamera nicht notwendig ist.

Das Werkstück 2 oder auch dessen Spannmittel können somit in die Kinematische Kette der Werkzeugmaschine eingebunden und beispielsweise für eine Kollisionsüberwachung berücksichtigt werden, obwohl die genaue Lage der Kamera nicht bekannt ist und sich auch von einer Messung zur nächsten verändern kann.

## Patentansprüche

1. Vorrichtung zum Erfassen der Lage eines Objekts in einer Werkzeugmaschine, mit einer Kamera (3), die ein Bild des Objekts (2) und eines Objektträgers (1) liefert, mit dem das Objekt (2) verbunden ist und dessen Lage innerhalb der Werkzeugmaschine bekannt ist, mit einem ersten Verarbeitungsmittel zum Erkennen der Lage des Objekts (2) relativ zur Kamera (3) anhand von aus dem Bild gewonnenen geometrischen Merkmalen des Objekts (2), **gekennzeichnet durch** ein zweites Verarbeitungsmittel zum Erkennen der Lage des Objektträgers (1) relativ zur Kamera anhand von aus dem Bild gewonnenen geometrischen Merkmalen des Objektträgers (1), sowie **durch** ein drittes Verarbeitungsmittel zum Bestimmen der Relativlage zwischen Objektträger (1) und Objekt (2) aus den Relativlagen zwischen Kamera (3) und Objekt (2) bzw. Kamera (3) und Objektträger (1).

2. Vorrichtung nach Anspruch 1, **dadurch gekennzeichnet, dass** das erste Verarbeitungsmittel über einen Speicherbereich verfügt, in dem geometrische Informationen verschiedener Objekte (2) abgespeichert sind.

3. Vorrichtung nach Anspruch 2, **dadurch gekennzeichnet, dass** das erste Verarbeitungsmittel eingerichtet ist, um ein auf dem Bild der Kamera gezeigtes Objekt (2) anhand der abgespeicherten geometrischen Informationen zu erkennen.

4. Vorrichtung nach einem der vorhergehenden Ansprüche, **dadurch gekennzeichnet, dass** es sich bei dem Objekt (2) um ein zu bearbeitendes Werkstück oder um ein Spannmittel zum Festlegen eines Werkstücks an einem Werkstückträger (1) handelt.

5. Vorrichtung nach einem der vorhergehenden Ansprüche, **dadurch gekennzeichnet, dass** das zweite Verarbeitungsmittel über einen Speicherbereich verfügt, in dem geometrische Informationen des Objektträgers (1) abgespeichert sind.

6. Vorrichtung nach einem der Ansprüche 2, 3 oder 5, **dadurch gekennzeichnet, dass** die geometrischen Informationen in Form eines CAD - Modells oder als Kamerabilder vorliegen.

7. Vorrichtung nach einem der vorhergehenden Ansprüche, **dadurch gekennzeichnet, dass** der Objektträger (1) Bestandteil einer Kinematischen Kette der Werkzeugmaschine ist, so dass dessen Lage zu einem Bearbeitungswerkzeug in einer übergeordneten Steuerung (4) bekannt ist.

8. Vorrichtung nach Anspruch 7, **dadurch gekennzeichnet, dass** die Kamera (3) an einem Teil der Werkzeugmaschine befestigt ist, das nicht Bestandteil der Kinematischen Kette der Werkzeugmaschine ist, so dass die Lage der Kamera relativ zu den Bestandteilen der Kinematischen Kette undefiniert ist.

9. Verfahren zum Erfassen der Lage eines Objekts in einer Werkzeugmaschine mittels einer Kamera (3), die ein Bild des Objekts (2) und eines Objektträgers (1) liefert, mit dem das Objekt (2) verbunden Ist und dessen Lage innerhalb der Werkzeugmaschine bekannt ist, wobei ein erstes Verarbeitungsmittel die Lage des Objekts (2) relativ zur Kamera (3) anhand von geometrischen Merkmalen des Objekts (2) ermittelt, **dadurch gekennzeichnet, dass** ein zweites Verarbeitungsmittel die Lage des Objektträgers (1) relativ zur Kamera (3) anhand von aus dem Bild gewonnenen geometrischen Merkmalen des Objektträgers (1) ermittelt, und dass ein drittes Verarbeitungsmittel die Relativlage zwischen Objektträger (1) und Objekt (2) aus den Relativlagen zwischen Kamera (3) und Objekt (2) bzw. Kamera (3) und Objektträger (1) ermittelt.

10. Verfahren nach Anspruch 9, **dadurch gekennzeichnet, dass** das erste Verarbeitungsmittel die aus dem Bild gewonnenen geometrischen Informationen des Objekts (2) mit den in einer Bibliothek abgespeicherten geometrischen Informationen möglicher Objekte vergleicht, und bei hinreichender Übereinstimmung eines dieser möglichen Objekte als das auf dem Objektträger tatsächlich angeordnete Objekt (2) erkennt.

11. Verfahren nach einem der Ansprüche 9 oder 10, **dadurch gekennzeichnet, dass** der Objektträger (1) Bestandteil einer Kinematischen Kette der Werkzeugmaschine ist, so dass dessen Lage zu einem Bearbeitungswerkzeug in einer übergeordneten Steuerung (4) bekannt ist, und dass das Objekt (2) selbst nach der Ermittlung seiner Relativlage zum Objektträger (1) zum Bestandteil der Kinematischen Kette wird, und damit dessen Lage zum Bearbeitungswerkzeug in der übergeordneten Steuerung (4) bekannt ist.

## Claims

1. Apparatus for capturing the position of an object in a machine tool, having a camera (3), which supplies an image of the object (2) and of an object carrier (1) with which the object (2) is connected and the position of which within the machine tool is known, having a first processing means for detecting the position of the object (2) relative to the camera (3) on the basis of geometrical features of the object (2) obtained from the image, **characterized by** a second processing means for detecting the position of the object carrier (1) relative to the camera on the basis of geometrical features of the object carrier (1) obtained from the image, and by a third processing means for determining the relative position between object carrier (1) and object (2) from the relative positions between camera (3) and object (2) and between camera (3) and object carrier (1).

2. Apparatus according to Claim 1, **characterized in that** the first processing means has a storage region in which geometrical information of different objects (2) is stored.

3. Apparatus according to Claim 2, **characterized in that** the first processing means is adapted to recognize an object (2) shown on the image of the camera on the basis of the stored geometrical information.

4. Apparatus according to one of the preceding claims, **characterized in that** the object (2) is a workpiece to be processed or a mounting means for fixing a workpiece on a workpiece carrier (1).

5. Apparatus according to one of the preceding claims, **characterized in that** the second processing means has a storage region in which geometrical information of the object carrier (1) is stored.

6. Apparatus according to one of Claims 2, 3 and 5, **characterized in that** the geometrical information is available in the form of a CAD model or as camera images.

7. Apparatus according to one of the preceding claims, **characterized in that** the object carrier (1) is a constituent part of a kinematic chain of the machine tool, such that the position thereof relative to a processing tool in a higher-level controller (4) is known.

8. Apparatus according to Claim 7, **characterized in that** the camera (3) is attached to a part of the machine tool which is not a constituent part of the kinematic chain of the machine tool, such that the position of the camera relative to the constituent parts of the kinematic chain is undefined.

9. Method for capturing the position of an object in a machine tool using a camera (3), which supplies an image of the object (2) and of an object carrier (1) with which the object (2) is connected and the position of which within the machine tool is known, wherein a first processing means ascertains the position of the object (2) relative to the camera (3) on the basis of geometrical features of the object (2), **characterized in that** a second processing means ascertains the position of the object carrier (1) relative to the camera (3) on the basis of geometrical features of the object carrier (1) obtained from the image, and **in that** a third processing means ascertains the relative position between object carrier (1) and object (2) from the relative positions between camera (3) and object (2) and between camera (3) and object carrier (1).

10. Method according to Claim 9, **characterized in that** the first processing means compares the geometrical information of the object (2) obtained from the image to the geometrical information of possible objects stored in a library, and, if a sufficient match is found, recognizes one of said possible objects as the object (2) which is actually arranged on the object carrier.

11. Method according to one of Claims 9 and 10, **characterized in that** the object carrier (1) is a constituent part of a kinematic chain of the machine tool, such that the position thereof relative to a processing tool in a higher-level controller (4) is known, and **in that** the object (2) becomes itself a constituent part of the kinematic chain after the relative position thereof to the object carrier (1) is ascertained, and thus the position thereof relative to the processing tool in the higher-level controller (4) is known.

## Revendications

1. Dispositif destiné à détecter la position d'un objet dans une machine-outil, comportant une caméra (3) délivrant une image de l'objet (2) et d'un porte-objets (1), connecté à l'objet (2) et dont la position à l'intérieur de la machine-outil est connue, comportant un premier moyen de transformation destiné à détecter la position de l'objet (2) par rapport à la caméra (3) sur la base de caractéristiques géométriques de l'objet (2) obtenues à partir de l'image, **caractérisé par** un deuxième moyen de transformation destiné à détecter la position du porte-objets (1) par rapport à la caméra sur la base de caractéristiques géométriques du porte-objets (1) obtenues à partir de l'image, et par un troisième moyen de transformation destiné à déterminer la position relative entre le porte-objets (1) et l'objet (2) à partir des positions relatives entre la caméra (3) et l'objet (2) ou entre la caméra (3) et le porte-objets (1).

2. Dispositif selon la revendication 1, **caractérisé en ce que** le premier moyen de transformation comporte une zone de mémoire dans laquelle sont stockées des informations géométriques de différents objets (2).

3. Dispositif selon la revendication 2, **caractérisé en ce que** le premier moyen de transformation est conçu pour détecter un objet (2) représenté sur l'image de la caméra sur la base des informations géométrique stockées.

4. Dispositif selon l'une quelconque des revendications précédentes, **caractérisé en ce que** l'objet (2) est une pièce à usiner à transformer ou un moyen de serrage des liné à fixer une pièce à usiner sur un porte-pièces à usiner (1).

5. Dispositif selon l'une quelconque des revendications précédentes, **caractérisé en ce que** le deuxième moyen de transformation comporte une zone de mémoire dans laquelle sont stockées des informations géométriques du porte-objets (1).

6. Dispositif selon l'une quelconque des revendications 2, 3 ou 5, **caractérisé en ce que** les informations géométriques sont présentes sous la forme d'un modèle CAD ou d'une image de caméra.

7. Dispositif selon l'une quelconque des revendications précédentes, **caractérisé en ce que** le porte-objets (1) est un composant d'une chaîne cinématique de la machine-outil, de telle sorte que sa position soit connue d'un outil de transformation dans une unité de commande de niveau supérieur (4).

8. Dispositif selon la revendication 7, **caractérisé en ce que** la caméra (3) est fixée à une partie de la machine-outil qui n'est pas un composant de la chaîne cinématique de la machine-outil, de telle sorte que la position de la caméra par rapport aux composants de la chaîne cinématique ne soit pas définie.

9. Procédé de détection de la position d'un objet dans une machine-outil au moyen d'une caméra (3) qui délivre une image de l'objet (2) et d'un porte-objets (1) auquel l'objet (2) est lié et dont la position à l'intérieur de la machine-outil est connue, dans lequel un premier moyen de traitement détermine la position de l'objet (2) par rapport à la caméra (3) sur la base de caractéristiques géométriques de l'objet (2), **caractérisé en ce qu'**un deuxième moyen de traitement détermine la position du porte-objets (1) par rapport à la caméra (3) sur à base de caractéristiques géométriques du porte-objets (1) obtenues à partir de l'image, et **en ce qu'**un troisième moyen de traitement détermine la position relative entre le porte-objets (1) et l'objet (2) à partir des positions relatives entre la caméra (3) et l'objet (2) ou entre la caméra (3) et le porte-objets (1).

10. Procédé selon la revendication 9, **caractérisé en ce que** le premier moyen de traitement compare les informations géométriques de l'objet (2) obtenues à partir de l'image aux informations géométriques d'objets possibles stockées dans un bibliothèque, et en cas de concordance suffisante, **en ce qu'**il détecte l'un de ces objets possibles en tant qu'objet (2) effectivement disposé sur le porte-objets.

11. Procédé selon l'une quelconque des revendications 9 ou 10, **caractérisé en ce que** le porte-objet (1) est un composant d'une chaîne cinématique de la machine-outil, de telle sorte que sa position soit connue d'un outil de transformation dans une unité de commande de niveau supérieur (4), et **en ce que** l'objet (2), après obtention de sa position relative par rapport au porte-objets (1), devient lui-même un composant de la chaîne cinématique, et par conséquent, que sa position par rapport à l'outil de transformation est connue dans l'unité de commande de niveau supérieur (4).
